# EUROPÄISCHE PATENTSCHRIFT

(11) **EP 0 784 550 B1**
(45) Veröffentlichungstag und Bekanntmachung des Hinweises auf die Patenterteilung: **07.01.1999**
(21) Anmeldenummer: 94928192.7
(22) Anmeldetag: 04.10.1994
(51) Int. Cl.: B60S 1/36

(54) **SCHEIBENWISCHERANLAGE**
WINDSCREEN WIPER SYSTEM
SYSTEME D'ESSUIE-GLACE

(43) Veröffentlichungstag der Anmeldung: 23.07.1997
(73) Patentinhaber: BATTLOGG, Stefan, A-6771 St. Anton im Montafon (AT)
(72) Erfinder: BATTLOGG, Stefan, A-6771 St. Anton im Montafon (AT)
(74) Vertreter: Torggler, Paul, Dr.
(86) Internationale Anmeldenummer: AT9400142
(87) Internationale Veröffentlichungsnummer: WO9610501

(56) Entgegenhaltungen:
- WO-A-92/22445
- DE-A- 3 127 018
- DE-A- 3 545 784

## Beschreibung

Die Erfindung betrifft eine Scheibenwischeranlage, insbesondere für Personenkraftwagen, mit einem angetriebenen Wischerarm, der einen ersten um eine Achse schwenkbar gelagerten Wischerarmteil und einen teleskopisch verschiebbaren zweiten Wischerarmteil aufweist, an dessen freiem Ende ein Wischerblatt beweglich angeordnet ist.

Eine derartige Scheibenwischeranlage ist beispielsweise der WO-A 90/11209 zu entnehmen. Mittels eines längenveränderbaren Wischerarmes überstreicht das Wischerblatt einen wesentlich größeren Teil der Windschutzscheibe, als dies bei herkömmlichen bloß schwenkenden Wischerarmen der Fall ist. Das Wischerblatt kann durch die Längenänderung des Wischerarmes parallel zu den Seitenwänden der Scheiben gehalten werden, wobei es sich relativ zum schwenkenden Wischerarm verdreht. Der Ausschub des zweiten Wischerarmteiles erfolgt bevorzugt mittels einer beim Einziehen komprimierten Schraubenfeder, an deren Stelle aber auch ein Seilzug oder eine Verzahnung treten kann. Für die Parallelführung des Wischerblattes kann ein zweiter Seilzug vorgesehen sein, der sich zwischen einer das Wischerblatt tragenden Drehscheibe und einem karosseriefesten Basisteil erstreckt und im Ausmaß der Längenänderung auf eine Seilspule aufgewickelt oder von dieser abgezogen wird. Die beiden Wischerarmteile sind jeweils durch eine insbesondere gekrümmte Profilschiene gebildet, zwischen der Wälzlagerkäfige angeordnet sind. Als Schutz gegen eine Verschmutzung dient ein Faltenbalg. Der Wischerarm ist Verhältnismäßig breit, sodaß die Sicht und/oder die Konzentration des Fahrers gegebenenfalls beeinträchtigt sein könnte.

Die Erfindung hat es sich nun zur Aufgabe gestellt, bei einer Scheibenwischeranlage der eingangs erwähnten Art den längenveränderbaren Wischerarm möglichst zierlich zu gestalten, ohne die Stabilität und Möglichkeiten für die Unterbringung zweier Seilzüge zu verschlechtern.

Erfindungsgemäß wird dies dadurch erreicht, daß jeder Wischerarmteil zwei in einer zur Achse senkrechten Ebene voneinander distanzierte Teleskopschienen aufweist, die an den vorderen Enden durch ein Brückenstück verbunden sind. Jeder Wischerarmteil ist somit in zwei schmale Stege bzw. Stäbe unterteilt, die bevorzugt durch Rohre gebildet sind, sodaß der Wischerarm zwar die verwindungsstabile Breite aufweist, jedoch die Sicht des Fahrers praktisch nicht verschlechtert ist.

Die Unterbringung eines Seilzuges für die Verschiebung des Wischerarmteiles ist bevorzugt dadurch möglich, daß der Aufnahmeraum jeder Teleskopschiene des ersten Wischerarmteiles eine größere Querschnittsfläche als die im Aufnahmeraum verschiebbare Teleskopschiene des zweiten Wischerarmteiles aufweist, und der Seilzug zwischen den ineinander geführten Teleskopschienen angeordnet ist, wobei im Brückenstück des ersten Wischerarmteiles eine vordere Seilscheibe des Seilzuges drehbar gelagert ist.

Ebenso läßt sich auch ein zweiter Seilzug für eine das Wischerblatt tragende Drehscheibe in einfacher Weise unterbringen, wenn nämlich wie weiters bevorzugt vorgesehen ist, die Drehscheibe im Brückenstück des verschiebbaren zweiten Wischerarmteiles gelagert ist, und der zweite Seilzug im Inneren der zweiten Teleskopschienen geführt ist. Um den eine zumindest annähernde Parallelführung des Wischerblattes bewirkenden zweiten Seilzug an der Drehscheibe fixieren zu können, ist weiters bevorzugt die Drehscheibe mit einer Abflachung versehen, in der der Seilrillenquerschnitt der Drehscheibe verringert ist, wobei der zweite Seilzug mittels eines die Abflachung füllenden Klemmstückes fixiert ist. Andere Festlegungsarten können beispielsweise eine Verdickung des Seiles, beispielsweise ein Knopf, ein aufgepreßter Körper usw., sowie eine entsprechende Ausnehmung am Drehscheibenumfang umfassen.

Wenn der Spalt zwischen den Teleskopschienen des ersten Wischerarmteiles breiter als die Breite des Wischerblattes ist, so kann der zum Schwenklager des Wischerarmes ragende Teil des Wischerblattes, beispielsweise in einer Parkstellung zwischen die Teleskopschienen eintreten, was vor allem bei stärker gekrümmten Scheiben den Abstand des Wischerarmes zur Scheibe verringert, oder eine niederere Ausbildung des Wischerarmes ermöglicht.

Nachstehend wird nun die Erfindung anhand der Figuren der beiliegenden Zeichnungen näher beschrieben, ohne darauf beschränkt zu sein.

Es zeigt:
- Fig. 1: eine schematische Darstellung einer Fahrzeugscheibe mit einer Scheibenwischeranlage,
- Fig. 2: eine scheibenseitige Ansicht des vorderen Bereiches eines Wischerarmes,
- Fig. 3: einen Längsschnitt durch den Bereich des Wischerarmes und
- Fig. 4: einen Querschnitt durch ein Teleskopschienenpaar einer Ausführungsvariante.

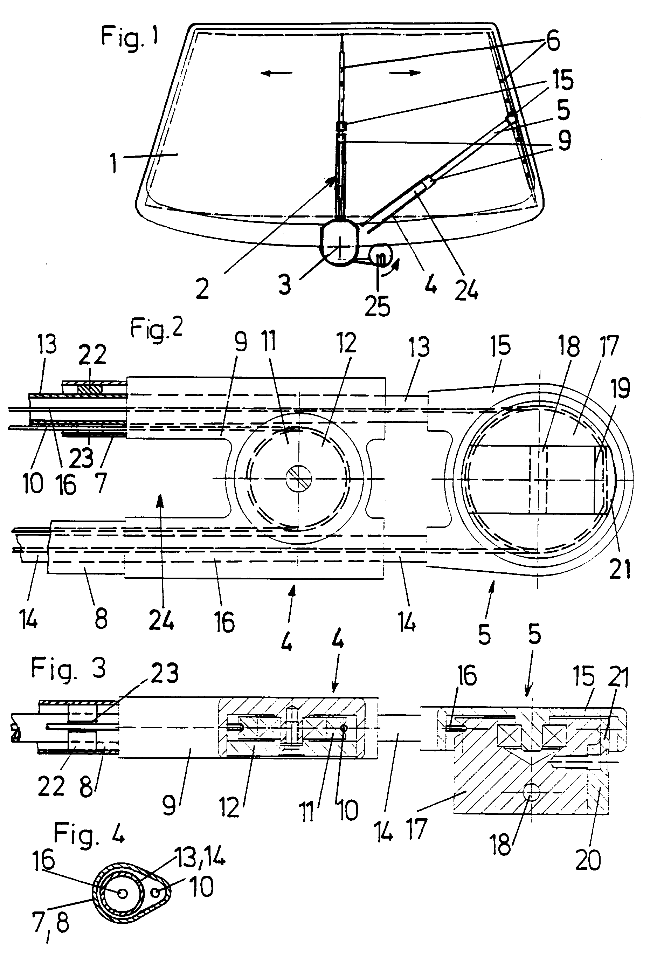

Ein Kraftfahrzeug weist eine etwa trapezförmige, gewölbte und seitlich gegebenenfalls stärker rückgebogene Windschutzscheibe 1 auf, der eine Einarmscheibenwischeranlage zugeordnet ist. Diese ist mit einem in der Länge verstellbaren, um eine Achse 3 schwenkbaren Wischerarm 2 versehen, der in Fig. 1 in zwei verschiedenen Positionen eingezeichnet ist. Am Wischerarm 2 ist ein Wischerblatt 6 drehbar gelagert. In der gezeigten, etwa mittigen Anordnung der Scheibenwischeranlage erstreckt sich der Wischerarm 2 im wesentlichen senkrecht über die Höhe der Scheibe 1, und weist in dieser Stellung seine kürzeste Länge auf, in der das Wischerblatt 6 annähernd mit dem Wischerarm 2 fluchtet. Beim Verschwenken des Wischerarmes 2 überstreicht das Wischerblatt 6 die strichliert umrandete Fläche, wobei es sich in den Endstellungen entlang der seitlichen Scheibenränder erstreckt. Aus der gezeigten mittleren Stellung ist der Wischerarm 2 ohne Verdrehung des Wischerblattes 6 auch in eine Parkstellung überführbar, in der der Wischerarm 2 etwa parallel zum unteren Scheibenrand liegt.

Der Wischerarm 2 weist zwei teleskopisch ineinander verschiebbare Wischerarmteile 4,5 auf, von denen der Wischerarmteil 4 einen um die Achse 3 schwenkbaren Grundkörper und der Wischerarmteil 5 das Drehlager für das Wischerblatt 6 trägt, das zusätzlich um eine Querachse 18 beweglich ist. Jeder der beiden Wischerarmteile 4,5 umfaßt zwei durch Rohre gebildete Teleskopschienen 7,8 bzw. 13,14 und endet in einem vorderen Brückenstück 9 bzw. 15. Die Teleskopschienen 7,8 und 13,14 sind jeweils unter Bildung eines Spaltes 24 voneinander distanziert und nebeneinander in einer zur Achse 3 senkrechten, also im wesentlichen parallel zur Scheibe 1 liegenden Ebene angeordnet, sodaß der Wischerarm 2 einerseits die zur Vermeidung von Verwindungen notwendige Breite aufweist, ohne die Sicht nennenswert zu behindern und andererseits auch eine geringe Dicke aufweist, und somit möglichst wenig von der Scheibe 2 hochsteht. Der Spalt 24 zwischen den Teleskopschienen 7,8 erlaubt es, dem Wischerblatt 6 bei einer stark seitlich gekrümmten Scheibe 2 auch, während der Überführung in die Parkstellung am unteren Scheibenrand zwischen der Teleskopschiene 7,8 einzuschwenken, sodaß eine besonders scheibennahe Lage gegeben ist.

Wenn für die Verschiebung des verschiebbaren zweiten Wischerarmteiles 5 ein Seilzug 10 vorgesehen ist, so ist in dem die beiden Teleskopschienen 7,8 des ersten schwenkbaren Wischerarmteiles 4 verbindenden Brückenstückes 9 eine Seilscheibe 11 hinter einer Abdeckung 12 drehbar gelagert. Die lichte Querschnittfläche der Teleskopschienen 7,8 des ersten Wischerarmteiles 4 ist größer als die Außenquerschnittfläche der Teleskopschienen 13,14, sodaß zwischen der Teleskopschienen 7,13 bzw. 8,14 ein Freiraum verbleibt. Gemäß Fig. 2 und 3 ist dieser Freiraum ringförmig, wobei jeweils ein Schlitz 23 aufweisende Distanzringe 22 als Gleitlager zwischen den Teleskopschienen 7,13 bzw. 8,14 angeordnet sind. Gemäß Fig 4 ist die innere Teleskopschiene 13,14 des zweiten Wischerarmteiles 5 zylindrisch, hingegen die äußere Teleskopschiene 7,8 einseitig ausgeweitet, wobei sie die innere Teleskopschiene 13,14 um mehr als 180° umgibt, die dadurch auch ohne Distanzringe 22 verschiebbar geführt ist, und in der Ausweitung der erwähnte Freiraum gebildet ist. Der Freiraum zwischen den beiden Teleskopschienen 7,13 bzw. 8,14 nimmt den Seilzug 10 auf, der über die Seilscheibe 11 und in der Ausführung nach Fig. 2 und 3, durch die Schlitze 23 der Distanzringe 22 verläuft, wobei sich die inneren Teleskopschienen 13,14 am Seilzug 10 und der Seilscheibe 11 vorbeibewegen können. An einer geeigneten Stelle ist der Seilzug 10 mit einer der beiden Teleskopschienen 13 oder 14 des verschiebbaren Wischerarmteiles 5 verbunden, sodaß eine Hin- und Herbewegung des Seilzuges 10 Aus- oder Einschub des Wischerarmteiles 5 bewirkt. Die Teleskopschienen 13 und 14 des verschiebbaren Wischerarmteiles 5 sind zusätzlich auch im Brückenstück 9 geführt, dessen Bohrungen im vorderen Bereich jeweils verjüngt sind.

Wenn für die relative Verdrehung des Wischerblattes 6 gegenüber dem schwenkenden Wischerarm ein zweiter Seilzug 16 vorgesehen ist, so ist um das die beiden Teleskopschienen 13,14 des zweiten Wischerarmteiles 5 verbindende Brückenstück 15 eine Drehscheibe 17 drehbar gelagert, die die Querachse 18 aufnimmt. Der Seilzug 16 wird zur Drehscheibe 17 durch die inneren Teleskopschienen 13,14 hindurch zugeführt. Da der Seilzug 16 von einem ortsfesten Bassisteil ausgeht und die Drehscheibe 17 in bezug auf den Basisteil im wesentlichen parallel führt (es findet höchstens eine minimale Verdrehung zur Anpassung an schräge Scheibenseitenränder statt, indem der wirksame Durchmesser des Basisteiles geringfügig größer als der Durchmesser der Drehscheibe gewählt wird), ist der Seilzug 16 an der Drehscheibe 17 fixiert. Zu diesem Zweck ist die Drehscheibe 17 mit einer Abflachung 19 versehen, die die Seilrille verkleinert und durch ein verschraubtes Klemmstück 20 ausgefüllt ist, dessen Klemmplatte 21 den Seilzug festklemmt.

Werden beide Seilzüge 10,16 eingesetzt, so sind diese im Wischerarm 2 durch die inneren Teleskopschienen 13,14 örtlich voneinander getrennt, und können sich gegenseitig in ihrer Bewegung nicht behindern. Weder für die Längenänderung noch für die Wischerblattdrehung sind die beschriebenen Seilzüge erforderlich, da für die Längenänderung auch andere, bekannte Schiebemechanismen (z.B. mechanisch über ein Kurbelgestänge, druckmittelbetrieben in einer Zylinder-Kolbenausführung, usw.) eingesetzt werden können. Ebenso ist auch die Wischerblattrelativdrehung bzw. -parallelführung mit anderen Einrichtungen (z.B. Parallelogrammlenkern, Getriebewellen, usw.) möglich. In jedem Fall ist durch die Unterteilung der Teleskopführung in zwei voneinander beabstandete Teleskopschienenpaare eine leichte und dennoch stabile Konstruktion gegeben, die sich hervorragend für die Unterbringung von Seilzügen eignet.

Die Teleskopschienen 7,8,13,14 können, falls es die Form der Scheiben erfordert, auch in Längsrichtung gekrümmt sein. In diesem Fall ist es denkbar, die Seilzüge 10,16 mit kugeligen Gleitkörpern zu bestücken, die als Führungselemente die Anlage des Seiles an den Teleskopschienen verhindern. Die Seilscheibe 11 weist dann Ausnehmungen in der Seilrille zum Eingriff der kugeligen Gleitkörper auf.

Die erfindungsgemäße Scheibenwischeranlage kann, insbesondere für größere Fahrzeuge, wie Busse, Lastkraftwagen, od.dgl. auch mehr als einen Wischerarm aufweisen. Dies ist vor allem bei aufgrund ihrer Größe unterteilten Windschutzscheiben der Fall. Ebenso können auf jedem Wischerarm auch zwei Wischerblätter parallel nebeneinander angeordnet sein. Die Scheibenwischeranlage eignet sich nicht nur für Frontscheiben, sondern kann auch für Heckscheiben oder andere zu wischende Gläser an Fahrzeugen oder stationären Einrichtungen, Bauwerken od.dgl. verwendet werden, die eine annähernde Rechteckform aufweisen.

## Patentansprüche

1. Scheibenwischeranlage, insbesondere für Personenkraftwagen, mit einem angetriebenen Wischerarm (2), der einen ersten um eine Achse (3) schwenkbar gelagerten Wischerarmteil (4) und einen teleskopisch verschiebbaren, zweiten Wischerarmteil (5) aufweist, an dessen freiem Ende ein Wischerblatt (6) beweglich angeordnet ist, dadurch gekennzeichnet, daß jeder Wischerarmteil (4,5) zwei in einer zur Achse (3) senkrechten Ebene Voneinander distanzierte Teleskopschienen (7,8; 13,14) aufweist, die an den Vorderen Enden durch ein Brückenstück (9,15) verbunden sind.

2. Scheibenwischeranlage nach Anspruch 1, dadurch gekennzeichnet, daß alle Teleskopschienen (7,8; 13,14) durch Rohre gebildet sind, wobei die Teleskopschienen (13,14) des zweiten Wischerarmteiles (5) in den Teleskopschienen (7,8) des ersten Wischerarmteiles (4) geführt sind.

3. Scheibenwischeranlage nach Anspruch 1 oder 2, mit einem im ersten Wischerarmteil (4) angeordneten Seilzug (10) für die Verschiebung des zweiten Wischerarmteiles (5), dadurch gekennzeichnet, daß der Aufnahmeraum jeder Teleskopschiene (7,8) des ersten Wischerarmteiles (4) eine größere Querschnittsfläche als die im Aufnahmeraum verschiebbare Teleskopschiene (13,14) des zweiten Wischerarmteiles (5) aufweist, und der Seilzug (10) zwischen den ineinander geführten Teleskopschienen (7,8; 13,14) angeordnet ist, wobei im Brückenstück (9) des ersten Wischerarmteiles (4) eine vordere Seilscheibe (11) des Seilzuges (10) drehbar gelagert ist.

4. Scheibenwischeranlage nach einem der Ansprüche 1 bis 3, mit einem zweiten Seilzug (16) zwischen einer am zweiten Wischerarmteil (5) drehbar gelagerten Drehscheibe (17), an der das Wischerblatt (6) beweglich angeordnet ist, und einem karosseriefesten Basisteil, der beim Verschwenken des Wischerarmes (2) die Verdrehung des Wischerblattes (6) relativ zum Wischerarm (2) bewirkt, dadurch gekennzeichnet, daß die Drehscheibe (17) in Brückenstück (15) des verschiebbaren zweiten Wischerarmteiles (5) gelagert ist, und der zweite Seilzug (16) im Inneren der zweiten Teleskopschienen (13,14) geführt ist.

5. Scheibenwischeranlage nach Anspruch 4, dadurch gekennzeichnet, daß die Drehscheibe (17) eine Abflachung (19) aufweist, und der zweite Seilzug (16) mittels eines in der Abflachung (19) angeordneten Klemmstückes (20) fixiert ist.

6. Scheibenwischeranlage nach einem der Ansprüche 1 bis 5, dadurch gekennzeichnet, daß der Spalt (24) zwischen den Teleskopschienen (7,8) des ersten Wischerarmteiles (4) breiter als die Breite des Wischerblattes (6) ist.

## Claims

1. A window wiper arrangement, in particular for private motor vehicles, comprising a driven wiper arm (2) having a first wiper arm portion (4) mounted pivotably about an axis (3) and a telescopically displaceable second wiper arm portion (5), at the free end of which a wiper blade (6) is movably arranged, characterised in that each wiper arm portion (4, 5) has two telescopic bars (7, 8; 13, 14) which are spaced from each other in a plane perpendicular to the axis (3) and which are connected at the front ends by a bridge portion (9, 15).

2. A window wiper arrangement according to claim 1 characterised in that all telescopic bars (7, 8; 13, 14) are formed by tubes, wherein the telescopic bars (13, 14) of the second wiper arm portion (5) are guided in the telescopic bars (7, 8) of the first wiper arm portion (4).

3. A window wiper arrangement according to claim 1 or 2 comprising a cable (10) arranged in the first wiper arm portion (4) for displacement of the second wiper arm portion (5), characterised in that the receiving space of each telescopic bar (7, 8) of the first wiper arm portion (4) is of a larger cross-sectional area than the telescopic bar of the second wiper arm portion (5), which is displaceable in the receiving space, and the cable (10) is arranged between the telescopic bars (7, 8; 13, 14) which are guided one within the other, wherein rotatably mounted in the bridge portion (9) of the first wiper arm portion (4) is a front cable pulley (11) of the cable (10).

4. A window wiper arrangement according to one of claims 1 through 3 comprising a second cable (16) between a rotary disk (17) which is rotatably mounted on the second wiper arm portion (5) and on which the wiper blade (6) is movably arranged, and a base portion which is fixed with respect to the bodywork and which upon pivotal movement of the wiper arm (2) causes the wiper blade (6) to turn relative to the wiper arm (2), characterised in that the rotary disk (17) is mounted in the bridge portion (15) of the displaceable second wiper arm portion (5) and the second cable (16) is guide in the interior of the second telescopic bars (13, 14).

5. A window wiper arrangement according to claim 4 characterised in that the rotary disk (17) has a flat (19) and the second cable (16) is fixed by means of a clamping portion (20) arranged in the flat (19).

6. A window wiper arrangement according to one of claims 1 through 5 characterised in that the gap (24) between the telescopic bars (7, 8) of the first wiper arm portion (4) is wider than the width of the wiper blade (6).

## Revendications

1. Système d'essuie-glace, en particulier pour des voitures particulières, avec un bras essuyeur (2) entraîné, qui présente une partie de bras essuyeur (4) montée à pivotement autour d'un axe (3) et une deuxième partie de bras essuyeur (5), déplaçable télescopiquement, à l'extrémité libre de laquelle un balai d'essuie-glace (6) est disposé de façon mobile, caractérisé en ce que chaque partie de bras essuyeur (4, 5) présente deux glissières télescopiques (7, 8; 13, 14) espacées l'une de l'autre dans un plan perpendiculaire par rapport à l'axe (3) et reliées aux extrémités avant par une pièce formant pont (9, 15).

2. Système d'essuie-glace selon la revendication 1, caractérisé en ce que toutes les glissières télescopiques (7, 8; 13, 14) sont constituées par des tubes, les glissières télescopiques (13, 14) de la deuxième partie de bras essuyeur (5) étant guidée dans les glissières télescopiques (7, 8) de la première partie de bras essuyeur (4).

3. Système d'essuie-glace selon la revendication 1 ou 2, comportant un câble de traction (10) disposé dans la première partie de bras essuyeur (4), pour le déplacement de la deuxième partie de bras essuyeur (5), caractérisé en ce que l'espace de logement de chaque glissière télescopique (7, 8) de la première partie de bras essuyeur (4) présente une section transversale d'aire supérieure à celle de la glissière télescopique (13, 14), déplaçable dans l'espace de logement, de la deuxième partie de bras essuyeur (5), et le câble de traction (10) est disposé entre les glissières télescopiques (7, 8; 13, 14) guidées l'une dans l'autre, une poulie à câble avant (11), pour le câble de traction (10), étant montée à rotation dans la pièce formant pont (9) de la première partie de bras essuyeur (4).

4. Système d'essuie-glace selon l'une des revendications 1 à 3, avec un deuxième câble de traction (16), entre un disque rotatif (17), monté à rotation sur la deuxième partie de bras essuyeur (5) et sur lequel le balai d'essuie-glace (6) est disposé de façon mobile, et une partie de base fixe par rapport à la carrosserie, qui provoque, lors du pivotement du bras essuyeur (2), la rotation du balai d'essuie-glace (6) par rapport au bras essuyeur (2), caractérisé en ce que le disque rotatif (17) est monté dans la pièce formant pont (15) de la deuxième partie de bras essuyeur (5) déplaçable et le deuxième câble de rotation (17) est guidé à l'intérieur des deux glissières télescopiques (13, 14).

5. Système d'essuie-glace selon la revendication 4, caractérisé en ce que le disque rotatif (17) présente un méplat (19) et le deuxième câble de traction (16) est fixé au moyen d'une pièce de serrage (20) disposée dans le méplat (19).

6. Système d'essuie-glace selon l'une des revendications 1 à 5, caractérisé en ce que l'intervalle (24) entre les glissières télescopiques (7, 8) de la première partie de bras essuyeur (4) est plus large que la largeur du balai d'essuie-glace (6).
